Europäisches Patentamt

(19) European Patent Office    (11) Veröffentlichungsnummer: **0 159 997**

Office européen des brevets    **B1**

(12) **EUROPÄISCHE PATENTSCHRIFT**

(45) Veröffentlichungstag der Patentschrift: **27.04.88**

(21) Anmeldenummer: **84902698.4**

(22) Anmeldetag: **12.07.84**

(86) Internationale Anmeldenummer: **PCT/CH 84/00114**

(87) Internationale Veröffentlichungsnummer: **WO 85/00646 (14.02.85 Gazette 85/04)**

(51) Int. Cl.⁴: **F 16 L 13/14, B 21 D 39/04**

---

(54) **KUPPLUNGSVORRICHTUNG ZUR HERSTELLUNG EINER PERMANENTEN ROHRVERBINDUNG.**

---

(30) Priorität: **19.07.83 CH 3947/83**
       **19.09.83 CH 5164/83**

(43) Veröffentlichungstag der Anmeldung:
**06.11.85 Patentblatt 85/45**

(45) Bekanntmachung des Hinweises auf die Patenterteilung:
**27.04.88 Patentblatt 88/17**

(84) Benannte Vertragsstaaten:
**AT BE CH DE FR GB LI LU NL SE**

(56) Entgegenhaltungen:
**EP-A-0 048 003**
**FR-A-2 356 867**
**US-A-3 893 718**

(73) Patentinhaber: **BOSS, Hans, Zelgmatt 12, CH- 8132 Egg b. Zürich (CH)**

(72) Erfinder: **BOSS, Hans, Zelgmatt 12, CH- 8132 Egg b. Zürich (CH)**
Erfinder: **PFISTER, Jürg, Deceased (CH)**

(74) Vertreter: **Maspoli, René A., Dipl.- Chem.Ing.ETH, Patentanwälte R.A. Maspoli und Partner Promenadengasse 18, CH- 8001 Zürich (CH)**

EP 0 159 997 B1

## Beschreibung

Kupplungsvorrichtungen zur Herstellung einer permanenten Rohrverbindung, bei der die Rohrendpartie durch zonenweise Kaltverformung mittels eines achsial zu verschiebenden Pressringes zu einer formschlüssigen, dichten Verbindung mit einem Stutzen eines Rohrformstückes verpresst wird, sind in zahlreichen Ausführungsformen bekannt, z. B. aus US-A-3 149 860, 3 375 026, 3 498 648, 3 528 689 und 4 061 367.

Mit Hilfe einer Kupplungsvorrichtung dieser Art lässt sich auf einfache Weise und mit verhältnismässig wenig Zeit- und Materialaufwand eine Rohrverbindung mit guten physikalischen Eigenschaften, wie hoher mechanischer Festigkeit und hohem Grad an Dichtigkeit herstellen.

In der Praxis hat es sich allerdings gezeigt, dass bei derartigen Rohrverbindungen in gewissen Anwendungsfällen die Güte der genannten physikalischen Eigenschaften auf die Dauer nicht erhalten bleibt, sondern sich vielmehr durch Korrosions- und Erosionseinflüsse in verhältnismässig kurzer Betriebszeit in einem unzulässigen Masse verringern können, so dass es zu einem Bruch der Rohrverbindung kommt.

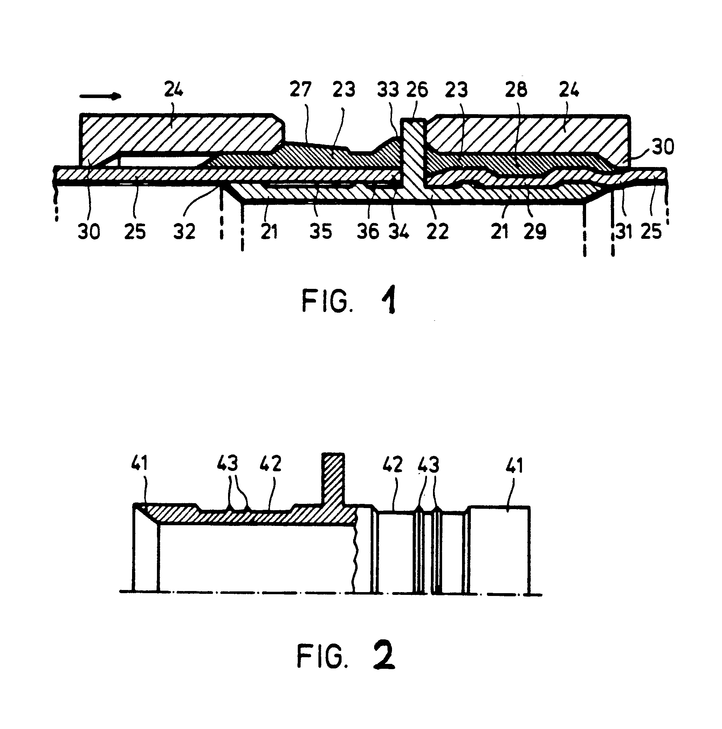

Befindet sich die Rohrendpartie innerhalb des Stutzens, wie z. B. bei den Rohrverbdindungen nach US-A-3 375 026 (Fig. 3), 3 498 648 und 4 061 367 (Fig. 5), so entstehen bei hoher Geschwindigkeit eines durch die Rohrleitung strömenden flüssigen Mediums Turbulenzen an der Stirnseite der Rohrendpartie bzw. an der Stoßstelle zweier Rohrenden infolge von Absätzen oder Spalten. Diese Turbulenzen führen an der Innenwandung des Stutzens zu Erosionseffekten, d. h. vom Stutzen (und von der Rohrendpartie) wird Material abgetragen, bis der Stutzen schliesslich zu Bruch geht. Bei geeigneter Konstruktion der Kupplungsteile und präziser Herstellung der Rohrverbindung liesse sich dieser Mangel zwar weitgehend beheben. Dabei kommt es vor allem auf einen präzisen Zuschnitt des Rohrendes an. In allen Anwendungsfällen, in denen die Rohrverbindung nicht fabrikmässig hergestellt wird, z. B. auf Baustellen, besteht jedoch keine Gewähr für die Einhaltung der verlangten hohen Präzision.

Weniger Probleme in dieser Beziehung ergeben sich bei Rohrverbindungen mit ausserhalb des Stutzens angeordneter Rohrendpartie, z. B. gemäss US-A-3 528 689 (Fig. 3) und 4 061 367 (Fig. 10). Bei diesen Ausführungsformen befinden sich an der Innenwandung des Rohrformstückes mit dem oder den Stutzen keine Unstetigkeiten im achsialen Querschnittsverlauf. Hingegen ist hier die Verbindungszone am Stutzenende gefährdet, da durch kapillares Eindringen von Leitungsflüssigkeit in den Spalt zwischen dem Stutzen und der diesen im Gleitsitz umgebenden Rohrwandung Spaltkorrosion auftreten kann, wobei das Rohr von innen her angegriffen und allmählich zerstört wird. Eine unstetige Änderung des Durchflussquerschnittes am Stutzenende kann überdies ebenfalls zu Turbulenzen und demzufolge zu einer Erosion in dieser Verbindungszone führen.

Die Erfindung bezweckt die Schaffung einer Kupplungsvorrichtung der eingangs beschriebenen Art, bei der die vorher erläuterten Nachteile vermieden werden können, um eine höhere Lebensdauer der Rohrverbindung zu erreichen.

Ausgehend von der in Fig. 5 der US-A-3 528 689 dargestellten Lösung, betrifft die hier beschriebene Erfindung eine Kupplungsvorrichtung zur Herstellung einer permanenten Rohrverbindung gemäss dem Oberbegriff des Patentanspruchs 1.

Der Spalt zwischen Stutzen und Rohrendpartie und damit die Gefahr einer Spaltkorrosion lässt sich durch eine am Stutzenende wirksame Pressverbindung dieser Teile vermeiden. Dementsprechend sieht die Erfindung vor, dass der Pressring an seinem hinteren Ende einen ringförmigen Innenwulst aufweist, der beim Aufpressen des Pressringes auf die Hülse das Hülsenmaterial am hinteren Hülsenende radial nach innen verdrängt, und dass die Länge des Stutzens in bezug auf die Länge des Pressringes und damit auf die achsiale Lage der am hinteren Hülsenende entstehenden ringförmigen Einbuchtung in der Rohrendpartie so gewählt ist, dass das freie Ende des Stutzens den tiefsten Punkt dieser Einbuchtung nicht überragt. Dadurch wird erreicht, dass das auf die Hülse ausgeübte Pressen an den dem Flansch abgewandten Ende des Stutzens am grössten ist und dass hier eine Kaltschweissung entsteht.

Auf diese Weise besteht bei ordungsgemässer Herstellung der Rohrverbindung die Gewähr, dass am Stutzenende eine wirksame Pressverbindung zwischen dem Stutzen und dem Rohrende und somit kein Spalt zwischen Rohrendpartie und Stutzen entsteht, wodurch die Gefahr einer Spaltkorrosion eliminiert ist.

Eine Herabsetzung der Erosionsgefahr lässt sich dadurch erzielen, dass erfindungsgemäss am freien Ende des Stutzens dessen Innenwand wenigstens annähernd bis zum Schnitt mit dessen Aussenwandung allmählich erweitert ist. Auf diese Weise ist es möglich, innerhalb der Rohrverbindung einen achsialen Querschnittsverlauf zu erreichen, der praktisch keine unstetigkeiten aufweist, die Turbulenzen herbeiführen könnten.

Die Kupplungsvorrichtungen nach der US-A-4 061 367 weisen keine den Erfindungsmerkmalen entsprechnde Massnahmen auf. Bei der dem Erfindungsgegenstand der Art nach am nächsten liegenden Ausführungsform nach Fig. 10 befindet sich am Ende des Stutzens keine Presszone. Im Gegenteil ist hier durch das konische Ende des Stutzens der Spalt zwischen demselben und der Rohrendpartie noch vergrössert. Auch fehlen Massnahmen zur Vermeidung von unstetigkeiten im Durchflussquerschnitt. Das Fehlen einer verformbaren Hülse hat bei dieser Ausführungsform überdies den Nachteil, dass das zu verbindende Rohr an dessen Endpartie auf den grössten Durchmesser des Stutzens ausgeweitet werden muss.

Aus der US-A-3 893 718 ist eine Kupplungsvorrichtung zur elektrisch isolierenden Verbindung zweier Metallrohre bekannt, bei der eine einzige verformbare Metallhülse mit ringförmigen Wulsten beide Rohrendpartien gemeinsam umschliesst, an der Innenseite der Metallhülse eine Isolierhülse angebracht ist und eine in die Rohrendpartien eingesetzte Isolierhülse mit Aussenflansch zur Isolierung der Rohrenden vorgesehen ist. Mit einem Werkzeug wird die Metallhülse zusammengedrückt, so dass das Hülsenmaterial in den Wulstzonen radial nach innen verdrängt wird. Dadurch entstehen an der Metallhülse, an den Isolierhülsen und an den Rohrendpartien ringförmige Einbuchtungen, die eine formschlüssige Verbindung zwischen der Metallhülse und den beiden Rohrendpartien ergeben. An der Verbindung verbleibende Pressringe sind bei dieser Kupplungsvorrichtung nicht vorgesehen. Mit Rücksicht auf die nichtmetallischen Isolierhülsen kann der Pressdruck nicht hoch sein, und von einer wirksamen Pressverbindung oder gar Kaltverschweissung zur Verhinderung einer Spaltkorrosion zwischen Rohrendpartie und innerer Isolierhülse kann hier nicht die Rede sein. Auch inbezug auf die Vermeidung von unstetigkeiten im Durchflussquerschnitt wird im Zusammenhang mit dieser Kupplungsvorrichtung keine Lösung angeboten.

Mit Vorteil weist die Hülse an ihrem vorderen Ende einen weiteren ringförmigen Aussenwulst auf, der beim Aufpressen des Pressringes auf die Hülse radial nach innen auf den Randteil der Rohrendpartie gepresst wird. Dadurch wird eine gute Dichtung gegen Eindringen von Medien von aussen am Übergang zwischen dem Rohrende und dem Flansch sichergestellt.

Gezogene und gepresste Rohre können an der Innenwandung von der Fabrikation herrührende Längsrillen aufweisen, die bei der Kaltverformung in der Kupplungszone nicht vollständig verschwinden und zu undichten Verbindungsstellen führen können. Diesem Übelstand lässt sich dadurch abhelfen, dass der Stutzen an seiner Aussenseite im Bereich einer Ringnut wenigstens eine Umfangsrippe mit scharfkantiger Krone aufweist. Durch diese Massnahme werden allfällige Längsrillen beim Verpressen der Rohre unterbrochen und abgedichtet. Zweckmässigerweise werden die Umfangsrippen dort angeordnet, wo der Pressdruck am grössten ist.

In der Zeichnung sind Ausführungsbeispiele der Erfindung im Längsteilschnitt dargestellt. Die Figur 1 zeigt eine Kupplungsvorrichtung zur Verbindung zweier Rohre miteinander. Die linke Seite der Figur zeigt die Teile der Kupplungsvorrichtung im montierten Zustand vor dem aufpressen des Pressringes, während auf der rechten Seite dieser Figur die fertige Rohrverbindung dargestellt ist. Die Figur 2 zeigt eine weitere Ausführungsform des Rohrformstückes.

Die Kupplungsvorrichtung nach Figur 1 besteht pro Rohrverbindung aus einem Stutzen 21 eines Rohrformstückes 22, einer Hülse 23 und einem Pressring 24. Der Stutzen 21 ist hohlzylinderförmig ausgebildet und wird in die gerade verlaufende Rohrendpartie 25 eingesetzt. An der Aussenseite des Stutzens 21 sind zwei Ringnuten 35 und 36 zur Aufnahme von durch den Pressring 24 verdrängtem Material vorgesehen. Das Rohrformstück 22 besitzt einen Flansch 26, an dem die Rohrendpartie 25, die Hülse 23 und der Pressring 24 zum Anschlag kommen. Die auf die Rohrendpartie 25 aufzuschiebende Hülse 23 ist mit einem ringförmigen Aussenwulst 27 versehen. Beim Aufpressen des Pressringes 24 in Pfeilrichtung wird die Hülse 23 verformt, so dass das Hülsenmaterial in der Wulstzone 28 radial nach innen verdrängt wird, wobei die Rohrendpartie 25 an dieser Stelle eine ringförmige Einbuchtung 29 erfährt und dabei mit dem Stutzen 21 zu einer formschlüssigen, dichten Verbindung verpresst wird.

Der Pressring 24 weist an seinem hinteren Ende einen ringförmigen Innenwulst 30 auf, der beim Aufpressen des Pressringes 24 auf die Hülse 23 das Hülsenmaterial am hinteren Hülsenende radial nach innen verdrängt. Dabei entsteht eine weitere ringförmige Einbuchtung 31 in der Rohrendpartie 25 und im Stutzen 21 und eine Verpressung dieser Teile am Hülsenende. Die Länge des Stutzens 21 ist in bezug auf die Länge des Pressringes 24 und damit auf die achsiale Lage der Einbuchtung 31 so gewählt, dass das freie Ende des Stutzens 21 nicht über den tiefsten Punkt der Einbuchtung 31 hinausragt. Damit soll erreicht werden, dass der Grad der am Hülsenende auf den Stutzen 21 ausgeübten Pressung am Ende des Stutzens am höchsten ist, so dass es zu einer Kaltverschweissung kommt. Um einen möglichst steten Übergang des Durchflussquerschnittes am Stutzenende zu erzielen, soll das Stutzenende 32 keine Stirnfläche, sondern bloss eine Stirnkante aufweisen. Zu diesem Zweck ist die Innenwandung des Stutzens 21 wenigstens annähernd bis zum Schnitt mit dessen Aussenwandung allmählich erweitert.

Unter Umständen kann es zweckmässig sein, die Stosstelle am Flansch 26 des Rohrformstückes 22 gegen das Eindringen flüssiger oder gasförmiger Medien von aussen an die Verbindungsstelle zwischen Rohrendpartie 25 und Rohrformstück 22 zu schützen. Eine diesbezügliche Abdichtung erfolgt zweckmässig wiederum durch eine mittels des Pressringes 24 herbeigeführte Verpressung. Die Hülse 23 weist zu diesem Zweck an ihrem vorderen Ende einen weiteren ringförmigen Aussenwulst 33 auf, derbeim Aufpressen des Pressringes 24 auf die Hülse 23 radial nach innen auf den Randteil 34 der Rohrendpartie 25 gepresst wird, wobei dieser Randteil 34 in die ringförmige Aussennut 36 des Stutzens 21 verdrängt wird.

In der Figur 2 ist eine weitere Ausführungsform eines Rohrformstückes dargestellt, welches ähnlich wie das Rohrformstück 22 in Figur 1 an der Aussenseite jedes Stutzens 41 eine Ringnut 42 aufweist. Zusätzlich sind hier im Bereich der Ringnut 42 zwei Umfangsrippen angeordnet, welche dreieckförmigen Querschnitt und dadurch eine scharfkantige Krone haben. Diese Umfangsrippen 43 dringen beim Aufpressen der Rohre in die Innenwandung derselben ein. Dadurch werden allfällige Längsrillen an der Rohrinnenwandung unterbrochen und abgedichtet.

Zur Herstellung der Rohrverbindung dient bekannterweise eine Spezialzange mit auswechselbaren Greifern, die im dargestellten Beispiel entweder an einem Pressring und am Flansch des Rohrformstückes oder an den beiden Pressringen angesetzt werden.

Die beschriebene Kupplungsvorrichtung eignet sich für Rohrverbindungen aller Art, und zwar zum Verbinden sowohl von Metall- als auch von Kunststoffrohren.

Vorzugsweise besteht das Rohrformstück aus dem gleichen verformbaren Material wie das an dieses anzuschliessende Rohr. Ausser im Rohrleitungsbau findet die Kupplungsvorrichtung auch Anwendungsmöglichkeiten bei mechanischen Rohrkonstruktionen, z. B. im Gerüstbau.

Die Metallrohre können z. B. aus Aluminium, Kupfer und deren Legierungen oder aus geeigneten Sorten von Stahl bestehen.

Dem Fachmann ist aufgrund der vorstehenden Beschreibung klar, dass die erfindungsgemässe Kupplungsvorrichtung auch nur einseitig installiert werden kann. Voraussetzung dafür ist, dass ein Rohrformstück vorliegt, das im wesentlichen einen Stutzen 21 und einen Flansch 26 umfasst.

**Patentansprüche**

1. Kupplungsvorrichtung zur Herstellung einer permanenten Rohrverbindung, bei der die Rohrendpartie (25) durch zonenweise Kaltverformung mittels eines axial zu verschiebenden Pressringes (24) zu einer formschlüssigen Verbindung mit einem in die Rohrendpartie eingesetzten Stutzen (21) eines Rohrformstückes (25) verpresst wird, wobei eine auf die Rohrendpartie aufzuschiebende Hülse (23) mit einem ringförmigen Aussenwulst (27) vorgesehen ist, die beim Aufpressen des Pressringes verformt wird, so dass das Hülsenmaterial in der Wulstzone (28) radial nach innen verdrängt wird, wobei ferner der Stutzen (21) an seiner Aussenseite wenigstens eine Ringnut (35, 36) zur Aufnahme von durch den Pressring (24) verdrängtem Material aufweist und wobei das Rohrformstück einen Flansch (26) aufweist, an dem die Rohrendpartie, die Hülse und der Pressring zum Anschlag kommen, dadurch gekennzeichnet, dass der Pressring (24) an seinem hinteren Ende einen ringförmigen Innenwulst (30) aufweist, der beim Aufpressen des Pressringes auf die Hülse (23) das Hülsenmaterial am hinteren Hülsenende radial nach innen drängt, dass die Länge des Stutzens (21) in bezug auf die Länge des Pressringes (24) und damit auf die axiale Lage der am hinteren Hülsenende entstehenden ringförmigen Einbuchtung (31) in der Rohrendpartie (25) so gewählt ist, dass das freie Ende (32) des Stutzens den tiefsten Punkt dieser Einbuchtung nicht überragt, und dass am freien Ende des Stutzens (21) dessen Innenwandung wenigstens annähernd bis zum Schnitt mit dessen Aussenwandung allmählich erweitert ist.

2. Kupplungsvorrichtung nach Anspruch 1, dadurch gekennzeichnet, dass die Hülse (23) an ihrem vorderen Ende einen weiteren ringförmigen Aussenwulst (33) aufweist, der beim Aufpressen des Pressringes (24) auf die Hülse radial nach innen auf den Randteil (34) der Rohrendpartie (25) gepresst wird.

3. Kupplungsvorrichtung nach Anspruch 1, dadurch gekennzeichnet, dass das Rohrformstück (22) aus dem gleichen verformbaren Material besteht wie das an dieses anzuschliessende Rohr.

4. Kupplungsvorrichtung nach Anspruch 1, dadurch gekennzeichnet, dass zwei Ringnuten (35, 36) vorgesehen sind, von denen sich jede im Bereich eines Aussenwulstes (27, 33) der Hülse (23) befindet.

5. Kupplungsvorrichtung nach Anspruch 1, dadurch gekennzeichnet, dass der Stutzen (41) an seiner Aussenseite im Bereich einer Ringnut (42) wenigstens eine Umfangsrippe (43) mit vorzugsweise scharfkantiger Krone aufweist.

**Claims**

1. Coupling device for establishing a permanent connection of pipes in which the end portion (25) of the pipe is pressed by means of cold forming over a zone using a pressure collar (24) which is displaced axially to form a positive connection with a connecting piece (21), inserted into the end portion of the pipe, of a pipe fitting (22), whereby there is provided a sleeve (23) with an annular external ridge (27) to be slipped onto the end portion of the pipe which sleeve is deformed when the pressure collar is pressed on so that the sleeve material in the ridge zone (28) is displaced radially inwards, whereby further the connecting piece (21) exhibits at least one annular groove (35, 36) on its outer side to accommodate the material displaced by the pressure collar (24) and whereby the pipe fitting exhibits a flange (26) against which the end portion of the pipe, the sleeve and the pressure collar come to rest, characterized in that

the pressure collar (24) exhibits at its rear end an annular inner ridge (30) which pushes the sleeve material at the rear end of the sleeve radially inwards when the pressure collar is pressed on the sleeve (23),

the length of the connecting piece (21) with respect to the length of the pressure collar (24) and hence to the axial position of the annular indentation (31) in the end portion (25) of the pipe produced at the rear end of the sleeve is selected such that the free end (32) of the connecting piece does not project beyond the lowest point of this indentation, and

at the free end of the connecting piece (21), the inner wall of the latter is gradually extended at least approximately up to the intersection with its outer wall.

2. Coupling device according to Claim 1, characterized in that the sleeve (25) exhibits at its front end a further annular outer ridge (33) which is pressed radially inwards onto the edge part (34) of the end portion (25) of the pipe when the pressure collar (24) is pressed onto the sleeve.

3. Coupling device according to Claim 1, characterized in that the pipe fitting (22) is made of the same deformable material as the pipe to be fitted to it.

4. Coupling device according to Claim 1, characterized in that two annular grooves (35, 36) are provided, each of which is situated in the area of an external ridge (27, 33) of the sleeve (23).

5. Coupling device according to Claim 1, characterized in that the connecting piece (41) exhibits on its outer side in the area of an annular groove (42) at least one circumferential rib (43), preferably with a sharp top edge.

**Revendications**

1. Dispositif d'accouplement permettant de réaliser un joint de tuyaux permanent, dans lequel le bout (25) du tuyau est comprimé par zones par déformation à froid à l'aide d'un anneau de compression (24) que l'on doit déplacer axialement en translation, de façon à réaliser une solidarisation, par complémentarité de forme, avec un bout tubulaire (21) d'une pièce moulée (22) de raccordement de tuyaux qui est introduit dans le bout du tuyau, tandis qu'il est prévu un manchon (23) devant être emboîté par dessus le bout du tuyau en le faisant glisser et comportant un bourrelet annulaire extérieur (27), ce manchon se trouvant déformé lors de l'emboîtement sous pression de l'anneau de compression, si bien que la matière du manchon est repoussée radialement vers l'intérieur dans la zone (28) du bourrelet, alors que par ailleurs le bout tubulaire (21) offre sur sa face extérieure au moins une gorge annulaire (35, 36) destinée à recevoir la matière repoussée par l'anneau de compression (24) et que la pièce moulée de raccordement de tuyaux, comporte une collerette (26) sur laquelle viennent en butée le bout du tuyau, le manchon et l'anneau de compression, ce dispositif d'accouplement étant caractérisé en ce que l'anneau de compression (24) comporte à son extrémité arrière un bourrelet intérieur annulaire (30) qui, lorsque cet anneau est emboîté sous pression par dessus le manchon (23), refoule radialement vers l'intérieur la matière de ce manchon située à son extrémité arrière, en ce que la longueur du bout tubulaire (21) est choisie par rapport à la longueur de l'anneau de compression (24), et donc par rapport à la position axiale de la partie repoussée annulaire (31) qui se présente dans le bout (25) du tuyau à l'endroit de l'extrémité arrière du manchon, de façon telle que l'extrémité libre (32) du bout tubulaire ne dépasse pas le point le plus bas de cette partie repoussée, et en ce que, à l'extrémité libre du bout tubulaire (21), la paroi intérieure de celui-ci s'évase progressivement au moins jusqu'à proximité de son intersection avec la paroi extérieure de ce bout tubulaire.

2. Dispositif d'accouplement suivant la revendication 1, caractérisé en ce que le manchon (23) comporte à son extrémité avant un autre bourrelet extérieur annulaire (33) qui est comprimé radialement vers l'intérieur sur le bord (34) du bout (25) du tuyau lors de l'emboîtement sous pression de l'anneau de compression (24) par dessus le manchon.

3. Dispositif d'accouplement suivant la revendication 1, caractérisé en ce que la pièce moulée de raccordement de tuyau (22) est réalisée dans la même matière déformable que le tuyau devant y être raccordé.

4. Dispositif d'accouplement suivant la revendication 1, caractérisé en ce qu'il est prévu deux gorges annulaires (35, 36) dont chacune se trouve située dans le domaine d'un bourrelet extérieur (27, 33) du manchon (23).

5. Dispositif d'accouplement suivant la revendication 1, caractégrisée en ce que le bout tubulaire (41) comporte, sur la face extérieure et dans le domaine d'une gorge annulaire (42), au moins une nervure périphérique (43) offrant de préférence une crête à arête vive.

FIG. 1

FIG. 2